# EUROPÄISCHE PATENTSCHRIFT

(11) **EP 0 969 738 B1**
(45) Veröffentlichungstag und Bekanntmachung des Hinweises auf die Patenterteilung: **18.06.2003**
(21) Anmeldenummer: 98916910.7
(22) Anmeldetag: 17.03.1998
(51) Int. Cl.: A23K 3/00, A23B 9/26, A23B 7/10, A01N 37/02

(54) **LÖSUNGEN AUS PROPIONSÄURE, AMMONIAK, PROPANDIOL UND WASSER UND DEREN VERWENDUNG**
PROPIONIC ACID, AMMONIA, PROPANEDIOL AND WATER SOLUTIONS AND THE USE THEREOF
SOLUTIONS A BASE D'ACIDE PROPIONIQUE, D'AMMONIAQUE, DE PROPANEDIOL ET LEUR UTILISATION

(30) Priorität: 21.03.1997 DE 19712040; 12.05.1997 DE 19719412
(43) Veröffentlichungstag der Anmeldung: 12.01.2000
(60) Teilanmeldung: 02008554.4
(73) Patentinhaber: BASF AKTIENGESELLSCHAFT, 67056 Ludwigshafen (DE)
(72) Erfinder: KAESLER, Bruno, D-67071 Ludwigshafen (DE); MÜSCHEN, Hans, D-67133 Maxdorf (DE); STREICHER, Harald, D-67069 Ludwigshafen (DE); SAMSON, Wolfgang, D-48159 Münster (DE)
(86) Internationale Anmeldenummer: EP9801373
(87) Internationale Veröffentlichungsnummer: WO98042205

(56) Entgegenhaltungen:
- EP-A- 0 241 400
- EP-A- 0 411 827
- DE-A- 2 644 351
- DE-A- 19 534 490
- DE-U- 29 712 131
- US-A- 4 806 353
- US-A- 4 847 067

## Beschreibung

Die vorliegende Erfindung betrifft Lösungen aus Propionsäure, Ammoniak, Propandiol und Wasser sowie gegebenenfalls weiteren Hilfsstoffen und deren Verwendung in der Tierernährung.

Die Verwendung von Propionsäure und ihren Salzen oder Estern als konservierender Zusatz zu Futtermitteln verschiedenster Art ist seit langem bekannt (DE/OS 20 19 125, DE/OS 20 19 972). Sie wird vor allem bei der Konservierung von Futtermitteln wie Mischfutter und Getreide, Hülsenfrüchte oder Nahrungsmittelabfällen verwendet. Die Wirkung der Propionsäure sowie ihrer Salze beruht auf ihrer bioziden und langanhaltenden biostatischen Wirkung (Zbl. Bakt. II, 125, H. 1, 100, 1970).

Bei der Verwendung reiner Propionsäure als Konservierungsmittel werden Lagerung und Anwendung erschwert durch die korrosive Wirkung und den unangenehmen Geruch sowie der ätzenden Wirkung der Säure. Wegen dieser Nachteile verwendet man anstelle der reinen Säure in vielen Fällen ihre Salze, insbesondere das Natrium- oder Kalziumsalz oder ihre Ester. Von Nachteil bei der Verwendung der Salze oder Ester ist, daß ein erheblicher Teil der bioziden und biostatischen Aktivität der Propionsäure verloren geht.

DE 195 34 490 A1 beschreibt wäßrige Lösungen aus 35 bis 42 Gew.-% Propionsäure, 30 bis 40 Gew.-% Ameisensäure, 5 bis 10 Gew.-% Ammoniak und 10 bis 30 Gew.-% Wasser und deren Verwendung in der Tierernährung.

US 4,847,067 beschreibt eine Zusammensetzung zur Aufbewahrung von Getreide in Metallbehältern, welche Propionsäuresalze enthält.

US 4,806,353 beschreibt ein Konservierungsmittel aus einem Propionsäuresalz, einem Fließmittel und einem Feuchthaltemittel.

EP 411 927 beschreibt wäßrige Zusammensetzungen, enthaltend Octansäure und Ameisensäure.

Aus EP-B-0 122 979 ist die dehydratisierende Wirkung von nahezu wasserfreiem Propylenglykol bei der Konservierung von Fischfutter bekannt. Zum Schutz gegen Verschimmeln werden dem Fischfutter außerdem 0,1 Gew.-% Kalziumpropionat zugesetzt. Das für die Konservierung von Fischfutter beschriebene Verfahren ist aufgrund der hohen Propylenglykol- (17 bis 50 Gew.-% bezogen auf das Futtergewicht) und der geringen Propionsäuremenge zur Konservierung anderer Tierfutter ungeeignet.

DE/OS 35 00 187 beschreibt ein stabiles pharmazeutisches Präparat zur Behandlung von Ketonämie bei kalbenden Rindern aus Kalziumpropionat, Dextrose, Propylenglykol und weiteren Zusatzstoffen wie Vitaminen, Mineralsalze und/oder Aminosäuren.

Aus EP-A-0 241 400 sind wäßrige Lösungen aus Ammoniumpropionat, das durch Mischung von 2 mol Propionsäure mit einem mol Ammoniumbicarbonat hergestellt wurde, und mindestens 5 Gew.-% Propylenglykol bekannt. Nachteil dieser wäßrigen Lösungen ist ihr für eine konzentrierte Anwendung des Ammoniumpropionats in der Futterkonservierung, zu hohe Wassergehalt von mindestens 15 Gew.-%, wodurch die Wirksamkeit der Propionsäure verringert wird.

In DE/OS 26 44 351 werden flüssige Gemische aus Ammoniumpropionat, Propylenglykol und Wasser beschrieben, wobei das Molverhältnis Ammoniumpropionat: Propylenglykol 1 : 0,1 bis 1 : 0,7 und das Molverhältnis Ammoniumpropionat : Wasser 1 : 2,0 bis 1 : 3,5 beträgt. Der Wassergehalt des flüssigen Gemisches liegt damit in einem Bereich von 20 bis 30 Gew.-% und ist für eine breite Anwendung des Konservierungsmittels zu hoch. Bei steigender Restfeuchte des zu konservierenden Futtermittels müssen die Aufwandmengen deutlich erhöht werden.

Dadurch und durch den hohen Wassergehalt lassen sich die in EP-A-0 241 400 und DE/OS 26 44 351 beschriebenen Lösungen nur bei Futtermittel, die eine maximale Restfeuchte von bis zu 20% haben, sicher zur Konservierung verwenden. Bei höheren Restfeuchten des Futters kommt es häufig zum Verderb der Futtermittel.

Für eine optimale Konservierung der Futtermittel sollte das Konservierungsmittel eine Reihe positiver Eigenschaften aufweisen, wie beispielsweise
1. keine oder geringe korrodierende Wirkung
2. keine oder geringe ätzende Wirkung
3. hohe und/oder dauerhafte biozide und/oder biostatische Wirkung
4. gute Anwendbarkeit des Konservierungsmittels (beispielsweise gute Mischbarkeit mit den zu konservierenden Nahrungsmitteln)
5. reduzierter Geruch (d.h. geringer Dampfdruck des Konservierungsmittel über der Lösung)
6. möglichst niedriger Wassergehalt (d.h. geringe Aufwandmenge, hohe Wirksamkeit)
7. keine oder geringe materialzerstörende Eigenschaften (d.h. keine Schädigung von Dichtungen, Ventilen und anderem)
8. kein Eingefrieren des Konservierungsmittels bei niedrigen Temperaturen
9. ausreichende Absenkung des pH-Wertes des zu konservierenden Nahrungsmittels

Es bestand daher die Aufgabe Konservierungslösungen bereitzustellen, die keine oder geringe korrodierende Wirkung, keinen oder geringen Geruch haben, nicht ätzend sind und eine hohe Wirksamkeit, aufweisen, andererseits einen für praktische Zwecke hinreichend tiefen Gefrierpunkt besitzen.

Es wurde gefunden, daß sich die gewünschten Eigenschaften erzielen lassen mit einer Lösung, im wesentlichen bestehend aus
78,0 - 93,0 Gew.-% Propionsäure,
0,5 - 5,0 Gew.-% Ammoniak,
1,0 - 6,0 Gew.-% Propandiol,
0,1 - 10,0 Gew.-% Wasser,
mit der Maßgabe, daß sich die Summe der einzelnen Komponenten zu 100 Gew.-% addiert.

Eine bevorzugte Ausführungsform ist eine Lösung, die im wesentlichen aus
a) 92 Gew.-% Propionsäure,
   3 Gew.-% Ammoniak,
   4 Gew.-% Propandiol und
   1 Gew.-% Wasser und
b) gegebenenfalls weiteren Hilfsstoffen besteht.

Eine weitere bevorzugte Ausführungsform ist eine Lösung, die im wesentlichen aus
a) 90 Gew.-% Propionsäure,
   3 Gew.-% Ammoniak,
   4 Gew.-% Propandiol und
   1 Gew.-% Wasser und
   2 Gew.-% oberflächenaktive Substanz und
b) gegebenenfalls weiteren Hilfsstoffen besteht.

Eine weitere bevorzugte Ausführungsform ist eine Lösung, die im wesentlichen aus
a) 93 Gew.-% Propionsäure,
   3 Gew.-% Ammoniak,
   4 Gew.-% Propandiol und
b) gegebenenfalls weiteren Kilfsstoffen besteht.

Die erfindungsgemäßen Lösungen enthalten 78 bis 93 Gew.-% Propionsäure, bevorzugt 85 bis 93 Gew.-%, besonders bevorzugt 87 bis 92 Gew.-%.

Der in den Lösungen enthaltene Ammoniak liegt in einem Bereich von 0,5 bis 5,0 Gew.-%, bevorzugt zwischen 2,0 bis 4,0 Gew.-%.

Unter Propandiol sind Propylenglykol und Trimethylenglycol zu verstehen, die in der Lösung vorteilhafterweise in einem Bereich von 1 bis 6 Gew.-%, bevorzugt zwischen 1 bis 4 Gew,-%, besonders bevorzugt zwischen 2 bis 4 Gew.-% enthalten sind.

Der Wassergehalt der Lösungen beträgt für die hohe biologische Wirksamkeit der Lösungen vorteilhafterweise 10 Gew.-% oder weniger oder kann auch 0 Gew.-% sein, bevorzugt 0,1 bis 6 Gew.-%, besonders bevorzugt 1 bis 3 Gew.-%.

Die erfindungsgemäßen Lösungen können außerdem oberflächenaktive Substanzen enthalten.

Als oberflächenaktive Substanzen sind beispielsweise alle anionischen, kationischen, amphoteren oder nichtionischen Tenside oder deren Mischungen geeignet, soweit sie für die Tierernährung geeignet sind, wie Polyglykolester, Polyglycerinether von Fettalkoholen, Zuckerester (Ester von beispielsweise Saccharose und Speisefettsäuren), Zuckerglyceride (Mischungen von Saccharoseestern und Mono- und Diglyceriden von Saccherose), Polyoxyethylen-/Polyoxypropylen-Copolymere (mittleres Molekulargewicht von 6800 bis 9000), Glycerinmono-, di- oder triester wie Mono- und Diglyceride von Speisefettsäuren mit niederen Carbonsäuren wie Citronensäure, Essigsäure, Milchsäure, Monoacethyl- und diacetyl-Weinsäure, Weinsäure oder Mono- und Diglyceride mit Speisefettsäuren, Sorbitanester oder -ethoxylate, Fettsäureesterethoxylate, ethoxylierte Alkylether höherer Fettsäuren oder Lecithin.

Als oberflächenaktive Substanzen sind beispielsweise Substanzen wie die verschiedenen Brij®-Typen, d.h. Cetyl-, Lauryl-,Oleyloder Stearylether mit 2 bis 100 Polyoxyethyleneinheiten, die verschiedenen Myrj®-Typen, d. h. Stearinester mit 8 bis 100 Polyoxyethyleneinheiten (= POE), die verschiedenen Span®-Typen wie Span 20 (Sorbitanmonolaurat), Span 40 (Sorbitanmonopalmitat), Span 60 (Sorbitanmonostearat) oder Span 80 (Sorbitanmonooleat), die verschiedenen Tween®-Typen wie Tween 20 (POE-(20)-Sorbitanmonolaurat), Tween 40 (POE (20)-Sorbitanmonopalmitat), Tween 60 (POE(20)-Sorbitanmonostearat) oder Tween 80 (POE(20)-Sorbitanmonooleat), die verschiedenen Triton®-Typen (Octylphenolethoxylate) wie Triton X-15, X-35, X-100 CG, X-305 (70%), X-405 (70%), X-705 (70%), die ethoxylierten Ricinusöle wie Polyoxyethylenglycerintriricinoleat 35 (Cremophor® EL) oder Polyoxyethylenglycerintrihydroxystearat 40 (Cremophor® RH40), die ethoxylierten-12-Hydroxystearinsäuren wie Polyoxyethylen-660-12'-hydroxystearat (Solutol® HS15) oder Natriumlaurylsulfat genannt. Bevorzugt werden Polyoxyethylen(20)Sorbitan-Monopalmitat, Polyoxyethylen-(20)Sorbitan-Monostearat, Polyoxyethylen(20)Sorbitan-Tristearat, Sorbitan-Monolaurat, -oleat, - palmitat, Sorbitan-Tristearat, Zuckerester, Zuckerglyceride, Polyglycerinether von Fettalkoholen, die ethoxylierten Ricinusöle (Cremophor®-Typen)

Als Hilfsstoffe können den erfindungsgemäßen Lösungen alle in der Landwirtschaft üblichen Hilfsstoffe zugegeben werden, wie Aromastoffe, Farbstoffe, Appetitanreger, Antibiotika, Probiotika und/oder Enzyme. Die Hilfsstoffe werden vorteilhafterweise in einer Menge von 0,1 Gew.-% bis 10 Gew.-% bezogen auf das Gewicht der Lösung bzw. auf das Gewicht des Konservierungsmittel (Komponente a) zugegeben, bevorzugt in einer Menge von 0,1 bis 1 Gew.-%.

Die erfindungsgemäßen Lösungen lassen sich herstellen, indem man die Propionsäure mit gasförmigem Ammoniak und/oder wäßriger Ammoniaklösung so versetzt, daß die angegebenen Gewichtsverhältnisse erreicht werden. Vorteilhafterweise wird bei Verwendung von gasförmigen Ammoniak der Ammoniak durch eine Fritte, einem Filter oder einer permeablen Membran in die Säure bevorzugt unter Rühren der Säure eingeblasen. Es kann auch, ausgehend vom Ammoniumsalz der Säure, solange weitere freie Säure hinzugefügt werden, bis das gewünschte Gewichtsverhältnis erreicht ist. Falls erforderlich kann Wasser bis zum Erreichen des angegebenen Gewichtes zugegeben werden. Das Propandiol sowie die oberflächenaktive Substanz können zusammen oder einzeln vor oder nach der Teilneutralisation mit Ammoniak zur Säure zugegeben werden.

Die erfindungsgemäßen Lösungen finden in der Tierernährung, vor allem als Zusatz für Futter für Schweine, Ferkel und Geflügel, wie Hühner und Puten, Anwendung. Sie eignen sich besonders zur Konservierung von Tierfutter, bevorzugt von Flüssigfutter und Mischfutter, gegen unerwünschte mikrobielle Zersetzung. Die erfindungsgemäßen Lösungen besitzen neben der pH-Wert senkenden und bioziden, biostatischen Wirkung auch einen nutritiven Effekt, der vor allem auf die Carbonsäuren wie Propionsäure oder Ameisensäure zurückzuführen ist, und der insbesondere bei der Schweinefütterung zur Geltung kommt.

Die erfindungsgemäßen Lösungen eignen sich vorteilhafterweise zur Konservierung von Mischfutter und Einzelfutter wie Futtergetreide wie Weizen, Hafer, Roggen, Gerste sowie Hülsenfrüchte, Mais, "Corn-cob-mix", Nebenprodukten aus Brauereien und Molkereien sowie zur Mischfutterkonservierung oder zur Konservierung von Flüssigfutter.

Die Lösungen sind auch allein oder in Kombination mit Milchsäurebakterien zur Konservierung von Nebenprodukten aus Schlachtereien oder der Zuckerproduktion geeignet.

Die erfindungsgemäßen Lösungen können auch als Zusatz zur Konservierung und/oder zur Desinfektion des in der Tierernährung verwendeten Trinkwassers eingesetzt werden.

Weitere vorteilhafte Anwendungen der erfindungsgemäßen Lösungen sind die Verhinderung der Nacherwärmung von Futtermitteln, die Ganzbehandlung und/oder die Oberflächenbehandlung vor der Konservierung der Futtermittel, sowie die Behandlung der Schnittfläche von Futtermitteln nach Öffnung der konservierten Futtermittel.

Eine weitere Anwendung der erfindungsgemäßen Lösungen ist bei der Herstellung von Silofutter (Silierung). In Silofutter findet häufig neben der gewünschten Milchsäuregärung eine unerwünschte mikrobielle Zersetzung, vor allem durch Schimmelpilze und Fäulnisbakterien statt. Um diese unerwünschte Fäulnis zu verhindern können dem Tierfutter die erfindungsgemäßen Lösungen zugesetzt werden.

Je nach Restfeuchte des Futtermittels und der gewünschten Konservierungsdauer sind unterschiedliche Aufwandmengen der erfindungsgemäßen Lösungen vorteilhaft. In der Regel ist ein Zusatz von 0,1 - 10 kg Lösung pro Tonne Tierfutter ausreichend für eine erfolgreiche Konservierung. Bevorzugt werden die Lösungen in Mengen von 0,5 - 4,5 kg pro Tonne Tierfutter zugesetzt. Bei dieser Dosierung lassen sich Futtermittel wie Getreide, Ackerbohnen, Mais, Raps oder Erbsen bis zu einer Restfeuchte von 50 % sicher konservieren.

Die erfindungsgemäßen Lösungen können den Futtermitteln oder Futtermittelgemischen in an sich bekannterweise zugesetzt werden. Der Zusatz zum Futtermittel kann direkt nach der Ernte oder Herstellung in Form der erfindungsgemäßen Lösungen erfolgen oder in Form von Partikel oder porösen Trägern auf die die Lösungen zunächst aufgebracht wurden. Diese Partikel oder Träger werden dabei mit dem Futtermittel vermischt. Als Partikel oder Träger kommen beispielsweise Vermiculit, Bimsstein oder getrocknete Zuckerrübenschnitzel in Frage. Die erfindungsgemäßen Lösungen können dem Futtermittel vorteilhafterweise während der Einlagerung des Futters mit einer Förderschnecke in den Silo über eine Dosiereinrichtung zugesetzt werden.

Die erfindungsgemäßen Lösungen sind beispielsweise für die Konservierung von Gras, landwirtschaftlichen Nutzpflanzen und/oder gemischter Tiernahrung und die zu ihrer Hestellung verwendeten Materialien, wie Gerste, Weizen, Roggen, Hafer, Mais, Reis, Raps, Hülsenfrüchte, Sonnenblumensamen, Sojabohnen, Zuckerrüben und Zuckerrohr sowie deren Rückstände, Heu, Stroh, Erdnüssen, Fischmehl, Fleisch- oder Knochenmehl geeignet.

Die erfindungsgemäßen Lösungen besitzen die folgenden Eigenschaften:
- Sie weisen einen pH-Wert im Bereich von 3,5 bis 4,5 auf.
- Ihre Gefrierpunkte liegen unterhalb von 0°C, die bevorzugten Lösungen haben Gefrierpunkte von tiefer als -20°C, die besonders bevorzugten von tiefer als -25°C.
- Ihre Dichte (20°C) beträgt 1,01 - 1,2 g/ml.
- Die Viskosität bei 20°C liegt in einem Bereich von 5 bis 35 mm²/s

### Beispiele

### Beispiel 1

Es wurde folgende Lösung A zur Konservierung von Weizen mit 20 % Restfeuchte verwendet.

### Lösung A

90 Gew.-% Propionsäure,
3 Gew.-% Ammoniak,
4 Gew.-% Propandiol
1 Gew.-% Wasser und
2 Gew.-% Cremophor® EL
pH 3,8 bis 4

Die Konservierungsdauer in den Beispielen wurde, wenn nicht anders angegeben, in einem Brutschrank bei 25 °C und einer relativen Luftfeuchte von 80 % ermittelt. Der Verderb der Proben wurde anhand der CO₂-Konzentration über dem Konservierungsgut bestimmt. Treten über dem Konservierungsgut CO₂-Konzentrationen über 1 % auf, so ist die Probe verdorben. Ausschlaggebend für die Konservierungsleistung ist die Dauer der Verhinderung des Verderbs gegenüber der Kontrolle.

**Tabelle I:**

| Konservierungsdauer gegenüber Kontrolle ohne Behandlung | | |
|---|---|---|
| Behandlungsart | Haltbarkeit (in Wochen) | Differenz gegenüber Kontrolle (in Wochen) |
| Kontrolle ohne Behandlung | 2 | - |
| 0,10 % Lösung A | 2 | - |
| 0,15 % Lösung A | 3 | 1 |
| 0,20 % Lösung A | 7 | 5 |
| 0,25 % Lösung A | 7 | 5 |
| 0,10 % reine Propionsäure | 2 | - |
| 0,15 % reine Propionsäure | 3 | 1 |
| 0,20 % reine Propionsäure | 7 | 5 |
| 0,25 % reine Propionsäure | 7 | 5 |
| 0,15 % Lösung X | 2 | - |
| 0,20 % Lösung X | 2 | - |
| 0,25 % Lösung X | 3 | 1 |
| 0,30 % Lösung X | 7 | 5 |
| 0,35 % Lösung X | 7 | 5 |
| Lösung X = 64 Gew.-% Propionsäure, 7,5 Gew.-% NH₃, Rest ist Wasser, pH 5,0 | | |

### Beispiel 2

Es wurde folgende Lösung D zur Konservierung von Mischfutter mit einer Restfeuchte von 19 % (Starterfutter für Ferkel) verwendet.

### Lösung D

- 93: Gew.-% Propionsäure,
- 3: Gew.-% Ammoniak,
- 4: Gew.-% Propandiol,
pH 4,4

**Tabelle IV:**

| Konservierungsdauer verschiedener Produkte | | | |
|---|---|---|---|
| Dosierung in % | reine Propionsäure | Lösung D | Lösung X |
| 0,1 | - | - | - |
| 0,15 | 1 Woche | - | - |
| 0,20 | 3 Wochen | 2 Wochen | - |
| 0,25 | 4 Wochen | 4 Wochen | 2 Wochen |
| 0,30 | 5 Wochen | 5 Wochen | 2 Wochen |

## Patentansprüche

1. Lösung bestehend im wesentlichen aus
78,0 - 93,0 Gew.-% Propionsäure
0,5 - 5,0 Gew.-% Ammoniak
1,0 - 6,0 Gew.-% Propandiol
0 - 10,0 Gew.-% Wasser,
mit der Maßgabe, daß sich die Summe der einzelnen Komponenten zu 100 Gew.-% addiert.

2. Lösung nach Anspruch 1, **dadurch gekennzeichnet, daß** sie zusätzlich bis zu 5 Gew.-% einer oberflächenaktiven Substanz enthält.

3. Verwendung einer Lösung gemäß einem der Ansprüche 1 bis 2 in Nahrungsmitteln.

4. Verwendung einer Lösung gemäß einem der Ansprüche 1 bis 2 zur Konservierung von Tierfutter.

5. Verwendung einer Lösung gemäß einem der Ansprüche 1 bis 2 zur Konservierung oder Desinfektion von Trinkwasser.

6. Verfahren zur Konservierung von Futtermitteln, **dadurch gekennzeichnet, daß** man dem Futtermittel oder den Futtermittelgemischen Lösungen gemäß Anspruch 1 in Mengen von 0,1 - 10 kg Lösung pro Tonne Tierfutter zusetzt.

7. Konservierungsmittel gemäß Anspruch 1 bestehend aus
a) 92 Gew.-% Propionsäure
3 Gew.-% Ammoniak
4 Gew.-% Propandiol
1 Gew.-% Wasser und
b) gegebenenfalls weiteren Hilfsstoffen.

8. Konservierungsmittel gemäß Anspruch 1 bestehend aus
a) 90 Gew.-% Propionsäure
3 Gew.-% Ammoniak
4 Gew.-% Propandiol
1 Gew.-% Wasser
2 Gew.-% oberflächenaktive Substanz und
b) gegebenenfalls weiteren Hilfsstoffen.

## Claims

1. A solution consisting essentially of
78.0 - 93.0% by weight propionic acid,
0.5 - 5.0% by weight ammonia,
1.0 - 6.0% by weight propanediol,
0 - 10.0% by weight water,
where the amounts of individual components add up to 100% by weight.

2. A solution as claimed in claim 1, which additionally comprises up to 5% by weight of a surface-active substance.

3. The use of a solution as claimed in either of claims 1 and 2 in foodstuffs.

4. The use of a solution as claimed in either of claims 1 and 2 for preserving animal feed.

5. The use of a solution as claimed in either of claims 1 and 2 for preserving or disinfecting drinking water.

6. A method for preserving feedstuffs, which comprises adding to the feedstuff or the feedstuff mixture a solution as claimed in claim 1 in amounts of 0.1-10 kg of solution per metric tonne of animal feed.

7. A preservative as claimed in claim 1 consisting of
a) 92% by weight of propionic acid
3% by weight of ammonia
4% by weight of propanediol
1% by weight of water
b) with or without other auxiliaries.

8. A preservative as claimed in claim 1 consisting of
a) 90% by weight of propionic acid
3% by weight of ammonia
4% by weight of propanediol
1% by weight of water
2% by weight of surface-active substance
b) with or without other auxiliaries.

## Revendications

1. Solution consistant essentiellement en
78,0 à 93,0 % en poids d'acide propionique
0,5 à 5,0 % en poids d'ammoniac
1,0 à 6,0 % en poids de propanediol
0 à 10,0 % en poids d'eau,
la somme des pourcentages indiquée pour les divers composants représentant 100 % en poids.

2. Solution selon la revendication 1, **caractérisée par le fait qu'**elle contient en outre jusqu'à 5 % en poids d'une substance tensio-active.

3. Utilisation d'une solution selon l'une des revendications 1 à 2, dans des produits alimentaires.

4. Utilisation d'une solution selon l'une des revendications 1 à 2, pour la conservation d'aliments pour animaux.

5. Utilisation d'une solution selon l'une des revendications 1 à 2, pour la conservation ou la désinfection de l'eau de boisson.

6. Procédé pour la conservation d'aliments pour animaux, **caractérisé par le fait que** l'on ajoute à l'aliment ou aux mélanges alimentaires pour animaux des solutions selon la revendication 1 en quantité de 0,1 à 10 kg de solution par tonne d'aliment pour animaux.

7. Conservateur selon la revendication 1, consistant en
a) 92 % en poids d'acide propionique,
3 % en poids d'ammoniac,
4 % en poids de propanediol,
1 % en poids d'eau et
b) le cas échéant d'autres produits auxiliaires.

8. Conservateur selon la revendication 1, consistant en
a) 90 % en poids d'acide propionique,
3 % en poids d'ammoniac,
4 % en poids de propanediol,
1 % en poids d'eau,
2 % en poids d'une substance tensio-active et
b) le cas échéant d'autres produits auxiliaires.
